# EUROPEAN PATENT APPLICATION

(11) **EP 4 692 973 A1**
(43) Date of publication of application: **11.02.2026**
(21) Application number: 24778241.0
(22) Date of filing: 29.03.2024
(51) Int. Cl.: G05D 1/00

(54) **CONTROL METHOD AND APPARATUS FOR PREVENTING SELF-PROPELLED DEVICE FROM FALLING**

(30) Priority: 29.03.2023 CN 202310325162
(71) Applicant: Beijing Roborock Innovation Technology Co., Ltd., Beijing 102206 (CN)
(72) Inventor: WANG, Lei, Beijing 102206 (CN); SONG, Jian, Beijing 102206 (CN)
(74) Representative: Maiwald GmbH
(86) International application number: PCT/CN2024/084856
(87) International publication number: WO 2024/199455

(57) **Abstract**

The present application relates to the technical field of self-propelled devices, and discloses a method and apparatus for preventing a self-propelled device from falling, capable of being used for reducing the falling risk of the self-propelled device in a working process, thereby improving the intelligence level of the self-propelled device. The method comprises: determining, according to at least one task execution result of a self-propelled device in a working environment, an environmental map of a preset height plane corresponding to a space where the self-propelled device is located in the working environment, and a historical trigger record of a cliff sensor arranged on the self-propelled device in the working environment, wherein an unreachable area is marked in the environmental map: generating a task activity forbidden area of the self-propelled device according to the unreachable area and the historical trigger record: and controlling the self-propelled device to execute a preset task outside the task activity forbidden area.

## Description

The present disclosure claims priority to Chinese Patent Application No. CN202310325162.1 filed with China National Intellectual Property Administration on March 29, 2023, and entitled "METHOD AND APPARATUS FOR CONTROLLING ANTI-FALLING OF SELF-PROPELLED DEVICE", the content of which is incorporated herein by reference in its entirety.

### TECHNICAL FIELD

The present disclosure relates to the field of self-propelled device technologies, and in particular, to a method and apparatus for anti-falling of a self-propelled device.

### BACKGROUND

With the development of science and technology and the pursuit of a comfortable life, people have an increasingly strong demand for self-propelled devices, and at the same time, have an increasingly high expectation and requirement for self-propelled devices. In order to prevent the self-propelled device from falling when encountering a step, a stair, or a height difference while performing a task, a cliff sensor is usually provided on the self-propelled device. When the self-propelled device travels to a terrain with a certain height difference, the self-propelled device can be immediately stopped from moving forward, thereby effectively preventing the self-propelled device from falling from a high position and being damaged.

However, during the operation of the self-propelled device, if the cliff sensor fails or the cliff sensor is shielded, the cliff sensor will not be triggered normally. In this case, the self-propelled device will be at risk of falling, causing irreparable damage.

### SUMMARY

In view of this, the present disclosure provides a method and apparatus for controlling anti-falling of a self-propelled device, which mainly aims to reduce the risk of falling of the self-propelled device in an operating project and improve the intelligence level of the self-propelled device.

According to one aspect of the present disclosure, a method for controlling anti-falling of a self-propelled device with a built-in cliff sensor is provided. The method includes:
determining an environmental map corresponding to an operating environment and a historical trigger record of the cliff sensor in the operating environment based on at least one task execution result of the self-propelled device in the operating environment, where the environmental map is marked with an unreachable region;
determining a task activity forbidden region for the self-propelled device based on the unreachable region and the historical trigger record; and
controlling the self-propelled device to perform a preset task outside the task activity forbidden region.

Optionally, determining the environmental map corresponding to the operating environment and the historical trigger record of the cliff sensor in the operating environment based on the at least one task execution result of the self-propelled device in the operating environment includes:
acquiring the environmental map corresponding to the operating environment determined based on the at least one task execution result of the self-propelled device, where the environmental map is constructed and generated based on an external environmental feature extracted from environmental data collected by a sensor configured to the self-propelled device; and
extracting at least one historical trigger record of the cliff sensor based on at least one task execution result of the self-propelled device in the operating environment.

Optionally, determining the task activity forbidden region for the self-propelled device based on the unreachable region and the historical trigger record includes:
determining whether there is any region point in the unreachable region that matches a trigger point corresponding to the historical trigger record; and
if yes, marking and updating the unreachable region as a task activity forbidden region for the self-propelled device in the environmental map.

Optionally, after determining the task activity forbidden region for the self-propelled device based on the unreachable region and the historical trigger record, the method also includes:
displaying the task activity forbidden region to a user in the environmental map, and adjusting, in response to a region adjustment instruction sent by the user, a position and/or a size of the task activity forbidden region in the environmental map.

Optionally, controlling the self-propelled device to perform the preset task outside the task activity forbidden region includes:
controlling, in response to determining that current position coordinates of the self-propelled device coincide with contour coordinates of the task activity forbidden region, the self-propelled device to perform the preset task according to an anti-falling trajectory.

The anti-falling trajectory includes: controlling the self-propelled device to move from a coincident contour coordinate point as a starting point toward any direction away from the task activity forbidden region, or controlling the self-propelled device to move from a coincident contour coordinate point as a starting point along an edge of the task activity forbidden region to other regions not belonging to the task activity forbidden region in the environmental map.

Optionally, the method also includes:
updating the unreachable region in the environmental map based on a current task execution result of the self-propelled device in the operating environment; adjusting, after acquiring coordinates of a trigger point where the cliff sensor is triggered, the task activity forbidden region in the environmental map based on the updated unreachable region and the coordinates of the trigger point; and controlling the self-propelled device to perform the preset task outside the adjusted task activity forbidden region.

According to another aspect of the present disclosure, a self-propelled device is provided. The self-propelled device is configured with a built-in cliff sensor and a built-in driving module. The self-propelled device includes:
a map collection module, configured to collect environmental data in an operating environment of the self-propelled device; and
a control module, configured to, generate an environmental map marked with an unreachable region based on the environmental data, generate a task activity forbidden region for the self-propelled device in combination with a historical trigger record of the cliff sensor, and control the driving module to drive the self-propelled device to perform a preset task outside the task activity forbidden region.

Optionally, the control module includes a generation unit.

The generation unit is configured to extract an external environmental feature from the environmental data, and construct and generate an environmental map in the operating environment based on the external environmental feature, where the environmental map is marked with an unreachable region.

Optionally, the control module includes a determination unit and an updating unit.

The determination unit is configured to determine whether there is any region point in the unreachable region that matches a trigger point corresponding to the historical trigger record.

The updating unit is configured to mark and update, in response to that there exists any region point in the unreachable region that matches the trigger point corresponding to the historical trigger record, the unreachable region as a task activity forbidden region for the self-propelled device in the environmental map.

Optionally, the control module also includes a first adjustment unit.

The first adjustment unit is configured to display the task activity forbidden region to a user in the environmental map, and adjust, in response to a region adjustment instruction sent by the user, a position and/or a size of the task activity forbidden region in the environmental map.

Optionally, the control module also includes a control unit.

The control unit is configured to control, in response to determining that current position coordinates of the self-propelled device coincide with contour coordinates of the task activity forbidden region, the self-propelled device to perform the preset task according to an anti-falling trajectory.

The anti-falling trajectory includes: controlling the self-propelled device to move from a coincident contour coordinate point as a starting point toward any direction away from the task activity forbidden region, or controlling the self-propelled device to move from a coincident contour coordinate point as a starting point along an edge of the task activity forbidden region to other regions not belonging to the task activity forbidden region in the environmental map.

Optionally, the control module also includes a second adjustment unit.

The second adjustment unit is configured to: update the unreachable region in the environmental map based on a current task execution result of the self-propelled device in the operating environment; adjust, after acquiring coordinates of a trigger point where the cliff sensor is triggered, the task activity forbidden region in the environmental map based on the updated unreachable region and the coordinates of the trigger point; and control the self-propelled device to perform the preset task outside the adjusted task activity forbidden region.

According to yet another aspect of the present disclosure, a storage medium is provided. The storage medium stores a computer program. The computer program, when run by a processor, causes the processor to perform the above method for controlling anti-falling of a self-propelled device.

According to still another aspect of the present disclosure, a computer device is provided. The computer device includes a storage medium, a processor, and a computer program stored in the storage medium and executable by the processor. The processor, in response to running the computer program, is caused to perform the above method for controlling anti-falling of a self-propelled device.

By means of the above technical solutions, according to a method and apparatus for anti-falling of a self-propelled device provided by the present disclosure, an environmental map corresponding to an operating environment and a historical trigger record of a cliff sensor in the operating environment are first determined based on at least one task execution result of the self-propelled device in the operating environment; a task activity forbidden region for the self-propelled device is further generated based on an unreachable region marked in the environmental map and the historical trigger record; and finally, the self-propelled device is controlled to perform a preset task outside the task activity forbidden region. According to the technical solutions in the present disclosure, a task activity forbidden region is generated, and the self-propelled device can be controlled based on the task activity forbidden region, so that the risk of falling of the self-propelled device when the cliff sensor fails or the cliff sensor is shielded is effectively reduced, thereby improving the intelligence of the self-propelled device and reducing user losses.

The above description is only an overview of the technical solutions of the present disclosure. To more clearly understand the technical means of the present disclosure to enable implementation in accordance with the content of the specification and to make the above and other purposes, features, and advantages of the present disclosure more obvious and easy to understand, the detailed description of the present disclosure is provided below.

### BRIEF DESCRIPTION OF THE DRAWINGS

The drawings described herein are used to provide a further understanding of the present disclosure and constitute a part of the present disclosure. The exemplary embodiments of the present disclosure and the description thereof are used to explain the present disclosure and do not constitute an improper limitation to the present disclosure. In the drawings:
FIG. 1 shows a schematic flowchart of a method for controlling anti-falling of a self-propelled device according to one embodiment of the present disclosure;
FIG. 2 shows a schematic flowchart of another method for controlling anti-falling of a self-propelled device according to one embodiment of the present disclosure;
FIG. 3 shows a schematic diagram of an embodiment of controlling anti-falling of a self-propelled device according to one embodiment of the present disclosure;
FIG. 4 shows a schematic structural diagram of a self-propelled device according to one embodiment of the present disclosure; and
FIG. 5 shows a schematic diagram of a physical structure of a computer device according to one embodiment of the present disclosure.

### DETAILED DESCRIPTION

The present disclosure will be described in detail below with reference to the drawings and in conjunction with the embodiments. It should be noted that the embodiments of the present disclosure and the features in the embodiments may be combined with each other without conflict.

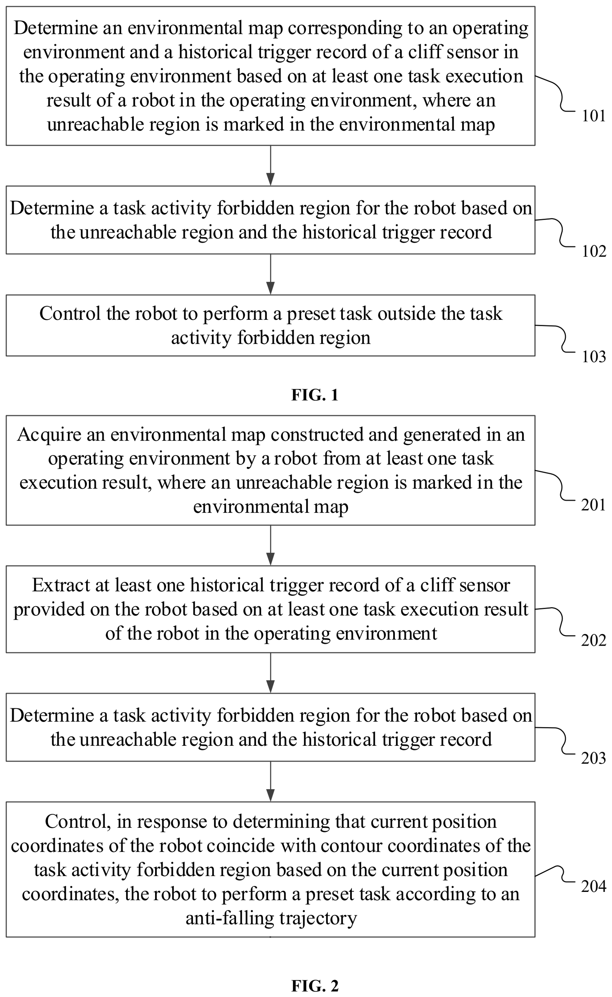

In order to reduce the risk of falling during the operation of a self-propelled device and improve the intelligence level of the self-propelled device, the present disclosure provides a method for controlling anti-falling of the self-propelled device. As shown in FIG. 1, the method includes the following steps.

In 101, an environmental map corresponding to an operating environment and a historical trigger record of a cliff sensor in the operating environment are determined based on at least one task execution result of the self-propelled device in the operating environment, where the environmental map is marked with an unreachable region.

The self-propelled device refers to a functional self-propelled device that can be configured to perform a preset task and is configured with a cliff sensor, and the preset task varies according to different specific application scenarios. Exemplarily, when the preset task is a cleaning task, the self-propelled device may be specifically a cleaning robot that can be configured to perform the cleaning task, such as a sweeping robot or a mopping robot. In this embodiment and subsequent steps of this embodiment, the technical solution in the present disclosure is described by taking the self-propelled device, being a cleaning robot, as an example, but this does not constitute a specific limitation on the technical solution in the present disclosure. The operating environment may be an operating zone when the self-propelled device performs a preset task, such as in a home, office, or shopping mall.

During the operation of the self-propelled device, surrounding environmental data are collected in real time, and an environmental map corresponding to the operating environment is generated based on the surrounding environmental data. Alternatively, the previously generated environmental map is corrected in real time. Finally, a specific preset task is intelligently performed based on the generated environmental map. The environmental map is marked with an unreachable region, and the unreachable region refers to a region where the self-propelled device can not reach due to the presence of an obstacle. For example, when the self-propelled device travels to a junction position between two regions, an obstacle prevents the self-propelled device from entering the other region, but the sensor on the self-propelled device can sense the presence of the other region; in such a case, this region is considered an unreachable region. In addition, in order to avoid falling during the operation of the self-propelled device, the bottom of the self-propelled device is usually configured with a cliff sensor. When the self-propelled device travels to a terrain with a certain downward height difference relative to the preset height plane corresponding to the space where the self-propelled device is located, the self-propelled device can be immediately stopped from moving forward, thereby effectively preventing the self-propelled device from falling from a high position and being damaged. In this scenario, when the self-propelled device travels to the boundary of the region with a downward cliff, since the cliff sensor detects the presence of the downward cliff, the self-propelled device stops moving forward to the downward cliff region. However, the sensor on the self-propelled device can sense the presence of the downward cliff region, so this region is also considered an "unreachable region". The cliff sensor specifically refers to an infrared paired tube containing one emitting tube and one receiving tube. When signals emitted by the emitting tube cannot be received by the receiving tube in time, it will be determined that the trigger point is relatively far from the self-propelled device, indicating the presence of a height difference, that is, a "cliff". For this embodiment, at least one environmental map generated by the self-propelled device during operation and at least one historical trigger record of the cliff sensor can be determined based on at least one task execution result of the self-propelled device in the operating environment, so as to determine a task activity forbidden region where the self-propelled device may have a potential risk of falling based on the unreachable region in the environmental map and the historical trigger record.

The present disclosure may be performed by a control apparatus of the self-propelled device, which may be configured inside the self-propelled device or be configured at a client or a server. The control apparatus can determine an environmental map planned and completed by the self-propelled device in the operating environment and a historical trigger record of a cliff sensor based on at least one task execution result of the self-propelled device in the operating environment, then generate a task activity forbidden region for the self-propelled device based on an unreachable region and the historical trigger record, and finally control the self-propelled device to perform a preset task outside the task activity forbidden region.

In 102, a task activity forbidden region for the self-propelled device is determined based on the unreachable region and the historical trigger record.

The task activity forbidden region refers to a non-operating zone where the self-propelled device automatically avoids when performing the preset task. For this embodiment, the purpose of determining the task activity forbidden region is that, if the cliff sensor fails or is shielded and thus cannot be triggered normally, making it impossible to determine the cliff region in real time, the self-propelled device can effectively avoid falling based on the generated task activity forbidden region. This ensures the normal operation of the self-propelled device, reduces the risk of falling of the self-propelled device in an operating project, and improves the intelligence level of the self-propelled device.

For this embodiment, since the unreachable region is determined by the self-propelled device in real time while performing the task, when an obstacle in the operating environment changes, the unreachable region may change at any time. For example, when the bedroom door changes from closed to open, the bedroom will change from an unreachable region to a reachable region. Therefore, generating the task activity forbidden region simply based on the unreachable region determined from the historical state is likely to affect the task execution effect. In addition, due to the particularity of the detection principle of the cliff sensor, that is, the cliff sensor uses an infrared (photoelectric) sensor, when the infrared sensor emits a beam of light or infrared rays onto an object, if no echo is received at a suitable distance, it can be determined that the self-propelled device enters a dangerous region. If lights (echoes) can be detected, it can prove that the self-propelled device is in a safe region. When the cliff sensor fails or does not operate and thus cannot detect the cliff region, at least one historical trigger record of the cliff sensor can be determined based on at least one task execution result of the self-propelled device in the operating environment, and the task activity forbidden region for the self-propelled device is further generated based on the at least one historical trigger record. However, the historical trigger record can only reflect the cliff region in the historical state, and cannot truly and accurately represent the trigger result at the current moment. Therefore, generating the task activity forbidden region simply based on the historical trigger record is also not accurate enough, which is likely to affect the task execution effect. In summary, to accurately control anti-falling of the self-propelled device and ensure that the self-propelled device can better perform the task, in the present disclosure, a more accurate task activity forbidden region can be determined from multiple dimensions by combining the unreachable region and the historical trigger record. That is, the task activity forbidden region needs to be an unreachable region marked for a single time or multiple times in the environmental map, and also needs to be a record triggered by the cliff sensor (identified as a cliff region by the cliff sensor) in a historical stage.

In 103, the self-propelled device is controlled to perform the preset task outside the task activity forbidden region.

For this embodiment, after the task activity forbidden region is determined, the self-propelled device can be controlled to perform the preset task based on the task activity forbidden region. Even if the cliff sensor of the self-propelled device is not triggered, the self-propelled device will automatically avoid the task activity forbidden region to avoid the risk of falling.

According to the method for controlling anti-falling of the self-propelled device in this embodiment, the environmental map corresponding to the operating environment and the historical trigger record of the cliff sensor in the operating environment can be first determined based on at least one task execution result of the self-propelled device in the operating environment; the task activity forbidden region for the self-propelled device is further generated based on the unreachable region marked in the environmental map and the historical trigger record; and finally, the self-propelled device is controlled to perform the preset task outside the task activity forbidden region. According to the technical solutions in the present disclosure, a task activity forbidden region is generated, and the self-propelled device can be controlled based on the task activity forbidden region, so that the risk of falling of the self-propelled device when the cliff sensor fails or the cliff sensor is shielded is effectively reduced, thereby improving the intelligence of the self-propelled device and reducing user losses.

Further, as a refinement and extension of the detailed description of the above embodiment, in order to fully illustrate a specific implementation process of this embodiment, another method for anti-falling of a self-propelled device is provided. As shown in FIG. 2, the method includes the following steps.

In 201, an environmental map, corresponding to the operating environment determined based on the at least one task execution result of the self-propelled device, is acquired, where the environmental map is marked with an unreachable region.

In a specific application scenario, to realize accurate positioning control of the self-propelled device, a plurality of sensors may be provided on the main body of the self-propelled device. The plurality of sensors are configured to collect environmental data around the main body of the self-propelled device, so as to extract an external environmental feature based on the environmental data, and construct an environmental map of the preset height plane corresponding to the space where the main body of the self-propelled device is located based on the external environmental feature. The sensor may include a lidar, a visual camera, a gyroscope, an odometer, and the like. Specifically, the self-propelled device can map a SLAM/VSLAM map of a certain height plane of the space where the main body of the self-propelled device is located via a sensor, such as a lidar, a visual camera, a gyroscope, or an odometer. The SLAM/VSLAM map has two-dimensional plane coordinates (XY) and has height information (Z). Z usually represents the floor height, i.e., 0, namely, the height of the preset height plane is 0, or it may also represent other actual detection heights of the sensor, which are not specifically limited herein. For this embodiment, an unreachable region can be further extracted from the environmental map. The unreachable region must satisfy the condition of being unreachable for a single time or multiple times after complete cleaning.

In 202, at least one historical trigger record of a cliff sensor is extracted based on at least one task execution result of the self-propelled device in an operating environment.

For this embodiment, at least one task execution result of the self-propelled device in the operating environment may be first acquired, and the at least one task execution result includes at least one historical trigger record of the cliff sensor being triggered in the normal operating state. The historical trigger record can, to a certain extent, reflect a cliff region in the operating environment. Therefore, in this embodiment, the at least one historical trigger record of the cliff sensor can be extracted when the cliff sensor fails or does not operate and thus cannot detect the cliff region, so as to further determine the task activity forbidden region for the self-propelled device by combining the at least one historical trigger record with the unreachable region marked in the environmental map.

In 203, a task activity forbidden region for the self-propelled device is determined based on the unreachable region and the historical trigger record.

For this embodiment, in a specific application scenario, when the task activity forbidden region for the self-propelled device is determined based on the unreachable region and the historical trigger record, a trigger point related to the cliff region may be first extracted based on the historical trigger record, and the trigger point is further matched with a region point in the unreachable region, i.e., determining whether the unreachable region is also identified as a cliff region by the cliff sensor. If the trigger point is successfully matched with the region point in the unreachable region, it can be determined that the unreachable region is of a high probability to be a region with a height difference, so the region may be marked as the task activity forbidden region for the self-propelled device for the second time. Correspondingly, step 203 in the embodiment may specifically include: determining whether there is any region point in the unreachable region that matches the trigger point corresponding to the historical trigger record; and if yes, marking and updating the unreachable region as a task activity forbidden region for the self-propelled device in the environmental map.

In a specific application scenario, to avoid misidentification, when the task activity forbidden region for the self-propelled device is generated, the region may also be displayed in a form visible to a user, allowing the user to edit and delete it. Correspondingly, steps of the embodiment may also include: displaying the task activity forbidden region to the user in the environmental map, and adjusting, in response to a region adjustment instruction sent by the user, the position and/or the size of the task activity forbidden region in the environmental map.

In 204, in response to determining that current position coordinates of the self-propelled device coincide with contour coordinates of the task activity forbidden region, the self-propelled device is controlled to perform the preset task according to an anti-falling trajectory.

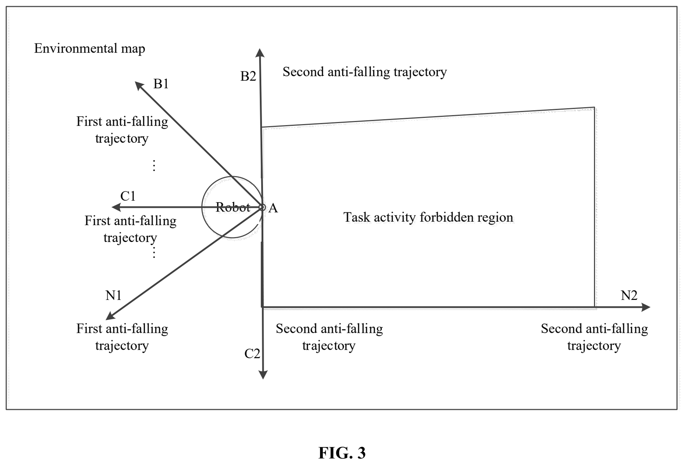

In a specific application scenario, when the cliff sensor fails or is shielded and thus cannot be triggered normally, the anti-falling trajectory of the self-propelled device can be planned in real time based on the current position coordinates of the self-propelled device, so as to control the self-propelled device to move in a direction away from the task activity forbidden region based on the anti-falling trajectory. Correspondingly, as shown in FIG. 3, as an optional method, the anti-falling trajectory may include a first anti-falling trajectory: First, the contour coordinate point A where the current position coordinates of the self-propelled device coincide with the task activity forbidden region is determined, and the first anti-falling trajectory may be further planned as A-B1, A-C1, ..., A-N1: The self-propelled device moves toward any direction (B1, C1, ..., N1) away from the task activity forbidden region by taking the coincident contour coordinate point A as the starting point. As another optional method, the anti-falling trajectory may include a second anti-falling trajectory: First, a contour coordinate point A where the current position coordinates of the self-propelled device coincide with the task activity forbidden region is determined, and the second anti-falling trajectory is further planned as A-B2, A-C2, ..., A-N2: The self-propelled device moves along an edge direction (B2, C2, ..., N2) of the task activity forbidden region to other regions not belonging to the task activity forbidden region in the environmental map by taking the coincident contour coordinate point A as the starting point. It should be noted that only a few optional trajectories of the first anti-falling trajectory and the second anti-falling trajectory are exemplarily provided in FIG. 3, and specific anti-falling trajectories along which the self-propelled device can move are not limited thereto.

Correspondingly, when the self-propelled device is performing a preset task, the unreachable region marked in the environmental map may be updated as the operating environment changes. In some embodiments, when the self-propelled device performs the preset task in the original operating environment and identifies that the bedroom door is closed before cleaning the bedroom, the self-propelled device marks the bedroom as an unreachable region in the process of performing the historical task. If the bedroom door changes from a closed state to an open state during subsequent task execution, the bedroom can be updated from the unreachable region to the reachable region based on the current task execution result of the self-propelled device in the operating environment; otherwise, the bedroom is updated from a reachable region to an unreachable region.

In a specific application scenario, since the task activity forbidden region is determined based on the unreachable region in the environmental map and the historical trigger record of the cliff sensor, there is likely to be incorrect planning and missed planning of the task activity forbidden region. Therefore, after the cliff sensor returns to normal operation, the coordinates of the trigger point where the cliff sensor is triggered can be acquired, and then the task activity forbidden region in the environmental map can be further adjusted based on the updated unreachable region and the coordinates of the trigger point, so as to ensure the authenticity and accuracy of the planned task activity forbidden region and further accurately control the self-propelled device to perform the preset task outside the adjusted task activity forbidden region. According to the steps of this embodiment, in one aspect, bidirectional verification and optimization can be performed on the trigger result and the pre-generated task activity forbidden region, thereby improving the identification performance of the self-propelled device for the cliff region; in another aspect, the task activity forbidden region can be dynamically adjusted based on the real-time trigger result of the cliff sensor, so that the real-time trigger result can meet the environmental layout of the operating environment in real time.

Correspondingly, when the task activity forbidden region in the environmental map is adjusted based on the updated unreachable region and the coordinates of the trigger point, as an optional method, an unreachable region marked for a single time or multiple times in the environmental map (the unreachable region is marked as unreachable at least once in the historical task execution result and the current task execution result) may be first determined; after acquiring the coordinates of the trigger point where the cliff sensor is triggered, any unreachable region whose coordinates coincide with the coordinates of the trigger point can be determined, and whether the unreachable region has been marked as the task activity forbidden region is further determined (that is, whether there is a historical trigger record in the unreachable region is verified); if not, the unreachable region is determined as a newly added task activity forbidden region. For example, region A has been marked as an unreachable region for a single time or multiple times in the environmental map, but there is no historical trigger record of the cliff sensor. Therefore, in step 203 of the embodiment, region A will not be determined as a task activity forbidden region. When the cliff sensor returns to normal operation, if the coordinates of the triggered trigger point in region A are acquired, and considering that region A has been marked as an unreachable region for a single time or multiple times in the environmental map, region A may be updated and determined as a task activity forbidden region.

In addition, as another optional method, a cliff sensor may be used to identify whether there is still a trigger point in the determined task activity forbidden region. If it is determined that there is no trigger point in the original task activity forbidden region (for example, the cliff region in the original task activity forbidden region has been eliminated), the task activity forbidden region may be further deleted from the environmental map. Exemplarily, if it is determined that there is no trigger point in the original task activity forbidden region, prompt information indicating that there is an abnormality in the task activity forbidden region may be displayed to the user in the environmental map, so as to adjust the task activity forbidden region in the environmental map in response to the region adjustment instruction (such as deleting the task activity forbidden region) sent by the user. For example, region B has been marked as an unreachable region for a single time or multiple times in the environmental map, and there is a historical trigger record of the cliff sensor. Therefore, in step 203 of the embodiment, region B will be determined as a task activity forbidden region. When the cliff sensor returns to normal operation, if it is detected that there is no coordinate of the triggered trigger point in region B, prompt information indicating that there is an abnormality in the task activity forbidden region determined in region B may be displayed to the user in the environmental map, so as to prompt the user to confirm whether there is a cliff region in region B. If it is determined that there is indeed no cliff region in region B, the mark of region B as a task activity forbidden region in the environmental map may be canceled based on the region adjustment instruction sent by the user, and region B may be restored to a normal task execution region.

By means of the above methods for controlling anti-falling of the self-propelled device, an environmental map of a preset height plane corresponding to the space where the self-propelled device is located in an operating environment and a historical trigger record of a cliff sensor in the operating environment may be first determined based on at least one task execution result of the self-propelled device in the operating environment; a task activity forbidden region for the self-propelled device is further generated based on the unreachable region marked in the environmental map and the historical trigger record; and finally, the self-propelled device is controlled to perform a preset task outside the task activity forbidden region. According to the technical solutions in the present disclosure, the cliff region with a height difference in the operating environment can be comprehensively determined from multiple dimensions, so that the accuracy of identifying the cliff region can be improved and the risk of falling of the self-propelled device when the cliff sensor fails or the cliff sensor is shielded can be effectively reduced, thereby improving the intelligence of the self-propelled device and minimizing user losses.

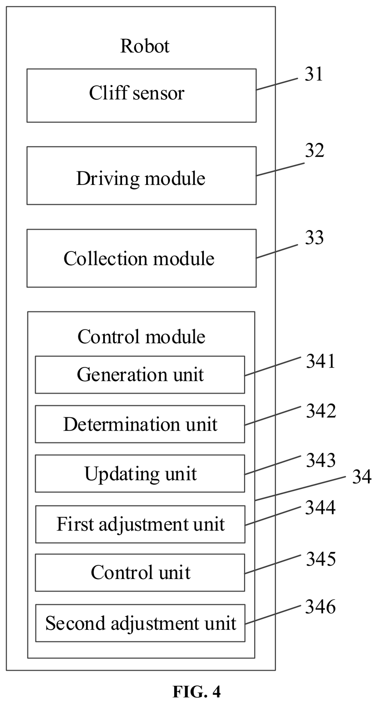

Further, as an implementation of the above methods shown in FIGs. 1 and 2, a self-propelled device is provided according to one embodiment of the present disclosure, which is configured with a built-in cliff sensor 31 and a built-in driving module 32. As shown in FIG. 4, the self-propelled device includes a map collection module 33 and a control module 34.

The map collection module 33 can be configured to collect environmental data in an operating environment of the self-propelled device.

The control module 34 can be configured to, generate an environmental map marked with an unreachable region based on the environmental data, generate a task activity forbidden region for the self-propelled device in combination with a historical trigger record of the cliff sensor, and control the driving module to drive the self-propelled device to perform a preset task outside the task activity forbidden region.

In a specific application scenario, as shown in FIG. 4, the control module 34 includes a generation unit 341.

The generation unit 341 can be configured to extract an external environmental feature from the environmental data, and construct and generate an environmental map in the operating environment based on the external environmental feature, where the environmental map is marked with an unreachable region.

In a specific application scenario, as shown in FIG. 4, the control module 34 includes a determination unit 342 and an updating unit 343;
The determination unit 342 can be configured to determine whether there is any region point in the unreachable region that matches the trigger point corresponding to the historical trigger record.

The updating unit 343 can be configured to mark and update, in response to that there exists any region point in the unreachable region that matches the trigger point corresponding to the historical trigger record, the unreachable region as a task activity forbidden region for the self-propelled device in the environmental map.

In a specific application scenario, the control module 34 also includes a first adjustment unit 344.

The first adjustment unit 344 can be configured to display the task activity forbidden region to a user in the environmental map, and adjust, in response to a region adjustment instruction sent by the user, the position and/or the size of the task activity forbidden region in the environmental map.

In a specific application scenario, as shown in FIG. 4, the control module 34 also includes a control unit 345.

The control unit 345 can be configured to control, in response to determining that current position coordinates of the self-propelled device coincide with the contour coordinates of the task activity forbidden region, the self-propelled device to perform the preset task according to an anti-falling trajectory.

The anti-falling trajectory includes: controlling the self-propelled device to move from a coincident contour coordinate point as a starting point toward any direction away from the task activity forbidden region, or controlling the self-propelled device to move from a coincident contour coordinate point as a starting point along an edge of the task activity forbidden region to other regions not belonging to the task activity forbidden region in the environmental map.

In a specific application scenario, as shown in FIG. 4, the control module 34 also includes a second adjustment unit 346.

The second adjustment unit 346 can be configured to: update the unreachable region in the environmental map based on the current task execution result of the self-propelled device in the operating environment; adjust, after acquiring coordinates of the trigger point where the cliff sensor is triggered, the task activity forbidden region in the environmental map based on the updated unreachable region and the coordinates of the trigger point; and control the self-propelled device to perform the preset task outside the adjusted task activity forbidden region.

It should be noted that for other corresponding descriptions of various functional units related to the self-propelled device according to the embodiment above, reference may be made to the corresponding description in FIGs. 1 to 2. Details are not described herein again.

Based on the above methods shown in FIGs. 1 and 2, correspondingly, a non-volatile storage medium is further provided according to one embodiment. The non-volatile storage medium stores computer-readable instructions. The computer-readable instructions, when executed by a processor, cause the processor to perform the above methods for controlling anti-falling of the self-propelled device as shown in FIGs. 1 and 2.

Based on such an understanding, the technical solutions according to the present disclosure may be embodied in the form of a software product. The software product may be stored in a non-volatile storage medium (which may be a CD-ROM, a USB flash drive, a portable hard drive, or the like), and includes several instructions to enable a computer device (which may be a personal computer, a server, a network device, or the like) to perform the methods according to the implementation scenarios of the present disclosure.

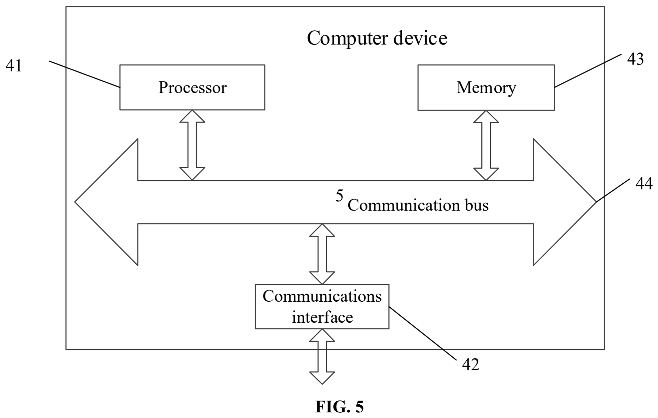

Based on the above methods shown in FIGs. 1 to 2 and the embodiment of the self-propelled device as shown in FIG. 4, in order to realize the above objectives, a computer device is further provided according to one embodiment. As shown in FIG. 5, the computer device includes a processor 41, a communications interface 42, a memory 43, and a communication bus 44. The processor 41, the communications interface 42, and the memory 43 communicate with each other by using the communication bus 44. The communications interface 44 is configured to communicate with a network element of other devices, such as a client or other servers. The processor 41 is configured to execute programs, and specifically can execute related steps in the above embodiments of the methods for controlling anti-falling of the self-propelled device. Specifically, the programs may include program codes, and the program codes include computer operation instructions. The processor 41 may be a processor CPU or an application specific integrated circuit (ASIC), or the processor may be configured as one or more integrated circuits.

Optionally, the computer device may also include a user interface, a network interface, a camera, a radio frequency (RF) circuit, a sensor, an audio circuit, a WI-FI module, and the like. The user interface may include a display, an input unit such as a keyboard, and the like. An optional user interface may also include a USB interface, a card reader interface, and the like. The network interface may optionally include a standard wired interface, a standard wireless interface (for example, a WI-FI interface), and the like.

Those skilled in the art can understand that a computer device structure provided in this embodiment does not constitute a limitation on the physical device, and may include more or fewer components, or combine some components, or have different component arrangements.

The non-volatile storage medium may also include an operating system and a network communication module. The operating system is the program that manages the hardware and software resources of the above computer device, and supports the operation of an information processing program and other software and/or programs. The network communication module is configured to implement the communication between the assemblies inside the non-volatile storage medium, and the communication with other hardware and software in the information processing physical device.

Based on the descriptions of the above embodiments, those skilled in the art can clearly understand that the present disclosure may be implemented by the mode of software in combination with a necessary general hardware platform, or may be implemented by hardware.

By applying the technical solutions according to the present disclosure, compared with the prior art, in the present disclosure, an environmental map of a preset height plane corresponding to the space where the self-propelled device is located in an operating environment and a historical trigger record of a cliff sensor in the operating environment can be first determined based on at least one task execution result of the self-propelled device in the operating environment; a task activity forbidden region for the self-propelled device is further generated based on an unreachable region marked in the environmental map and the historical trigger record; and finally the self-propelled device is controlled to perform a preset task outside the task activity forbidden region. According to the technical solutions in the present disclosure, the risk of falling of the self-propelled device when the cliff sensor fails or the cliff sensor is shielded can be effectively reduced, thereby effectively improving the intelligence of the self-propelled device and reducing user losses.

Those skilled in the art can understand that the drawings are merely schematic diagrams of a preferred implementation scenario, and the modules or procedures shown in the drawings are not necessarily required for implementing the present disclosure. Those skilled in the art can understand that a module of the apparatus in the implementation scenario may be distributed in the apparatus in the implementation scenario based on the description of the implementation scenario, or may be located in one or more apparatuses different from that in the implementation scenario with corresponding changes. The modules in the above implementation scenarios may be combined into one module or may be further divided into a plurality of submodules.

The serial numbers of the present disclosure are merely for description, and do not represent the advantages and disadvantages of the implementation scenarios. The content disclosed above is merely several specific implementation scenarios according to the present disclosure, but the present disclosure is not limited thereto. Any variation that can be figured out by those skilled in the art shall fall within the protection scope of the present disclosure.

## Claims

1. A method for controlling anti-falling of a self-propelled device with a built-in cliff sensor, comprising:
determining an environmental map corresponding to an operating environment and a historical trigger record of the cliff sensor in the operating environment based on at least one task execution result of the self-propelled device in the operating environment, wherein the environmental map is marked with an unreachable region ;
determining a task activity forbidden region for the self-propelled device based on the unreachable region and the historical trigger record; and
controlling the self-propelled device to perform a preset task outside the task activity forbidden region.

2. The method according to claim 1, wherein determining the environmental map corresponding to the operating environment and the historical trigger record of the cliff sensor in the operating environment based on the at least one task execution result of the self-propelled device in the operating environment comprises:
acquiring the environmental map corresponding to the operating environment determined based on the at least one task execution result of the self-propelled device, wherein the environmental map is constructed and generated based on an external environmental feature extracted from environmental data collected by a sensor configured to the self-propelled device; and
extracting at least one historical trigger record of the cliff sensor based on at least one task execution result of the self-propelled device in the operating environment.

3. The method according to claim 1, wherein determining the task activity forbidden region for the self-propelled device based on the unreachable region and the historical trigger record comprises:
determining whether there is any region point in the unreachable region that matches a trigger point corresponding to the historical trigger record; and
if yes, marking and updating the unreachable region as a task activity forbidden region for the self-propelled device in the environmental map.

4. The method according to claim 1, wherein after determining the task activity forbidden region for the self-propelled device based on the unreachable region and the historical trigger record, the method also comprises:
displaying the task activity forbidden region to a user in the environmental map, and adjusting, in response to a region adjustment instruction sent by the user, a position and/or a size of the task activity forbidden region in the environmental map.

5. The method according to claim 1, wherein controlling the self-propelled device to perform the preset task outside the task activity forbidden region comprises:
controlling, in response to determining that current position coordinates of the self-propelled device coincide with contour coordinates of the task activity forbidden region, the self-propelled device to perform the preset task according to an anti-falling trajectory,
wherein the anti-falling trajectory comprises: controlling the self-propelled device to move from a coincident contour coordinate point as a starting point toward any direction away from the task activity forbidden region, or controlling the self-propelled device to move from a coincident contour coordinate point as a starting point along an edge of the task activity forbidden region to other regions not belonging to the task activity forbidden region in the environmental map.

6. The method according to claim 1, wherein the method also comprises:
updating the unreachable region in the environmental map based on a current task execution result of the self-propelled device in the operating environment; adjusting, after acquiring coordinates of a trigger point where the cliff sensor is triggered, the task activity forbidden region in the environmental map based on the updated unreachable region and the coordinates of the trigger point; and controlling the self-propelled device to perform the preset task outside the adjusted task activity forbidden region.

7. A self-propelled device, configured with a built-in cliff sensor and a built-in driving module, comprising:
a map collection module, configured to collect environmental data in an operating environment of the self-propelled device; and
a control module, configured to, generate an environmental map marked with an unreachable region based on the environmental data, generate a task activity forbidden region for the self-propelled device in combination with a historical trigger record of the cliff sensor, and control the driving module to drive the self-propelled device to perform a preset task outside the task activity forbidden region.

8. The self-propelled device according to claim 7, wherein the control module comprises a generation unit, wherein
the generation unit is configured to extract an external environmental feature from the environmental data, and construct and generate an environmental map in the operating environment based on the external environmental feature, wherein the environmental map is marked with an unreachable region.

9. The self-propelled device according to claim 7, wherein
the control module comprises a determination unit and an updating unit;
the determination unit is configured to determine whether there is any region point in the unreachable region that matches a trigger point corresponding to the historical trigger record; and
the updating unit is configured to mark and update, in response to that there exists any region point in the unreachable region that matches the trigger point corresponding to the historical trigger record, the unreachable region as a task activity forbidden region for the self-propelled device in the environmental map.

10. The self-propelled device according to claim 7, wherein
the control module also comprises a first adjustment unit;
the first adjustment unit is configured to display the task activity forbidden region to a user in the environmental map, and adjust, in response to a region adjustment instruction sent by the user, a position and/or a size of the task activity forbidden region in the environmental map.

11. The self-propelled device according to claim 7, wherein the control module also comprises a control unit, wherein
the control unit is configured to control, in response to determining that current position coordinates of the self-propelled device coincide with contour coordinates of the task activity forbidden region, the self-propelled device to perform the preset task according to an anti-falling trajectory,
wherein the anti-falling trajectory comprises: controlling the self-propelled device to move from a coincident contour coordinate point as a starting point toward any direction away from the task activity forbidden region, or controlling the self-propelled device to move from a coincident contour coordinate point as a starting point along an edge of the task activity forbidden region to other regions not belonging to the task activity forbidden region in the environmental map.

12. The self-propelled device according to claim 7, wherein the control module also comprises a second adjustment unit;
the second adjustment unit is configured to: update the unreachable region in the environmental map based on a current task execution result of the self-propelled device in the operating environment; adjust, after acquiring coordinates of a trigger point where the cliff sensor is triggered, the task activity forbidden region in the environmental map based on the updated unreachable region and the coordinates of the trigger point; and control the self-propelled device to perform the preset task outside the adjusted task activity forbidden region.

13. A storage medium, wherein the storage medium stores at least one executable instruction; the executable instruction causes a processor to perform the method for controlling anti-falling of a self-propelled device according to any one of claims 1 to 6.

14. A computer device, comprising a storage medium, a processor, and a computer program stored in the storage medium and executable by the processor, wherein the processor, in response to running the computer program, is caused to perform the method for controlling anti-falling of a self-propelled device according to any one of claims 1 to 6.
